(19) Europäisches Patentamt

European Patent Office

Office européen des brevets

(11) Veröffentlichungsnummer: **0 361 017 B1**

(12) # EUROPÄISCHE PATENTSCHRIFT

(45) Veröffentlichungstag der Patentschrift: **16.12.92**

(51) Int. Cl.⁵: **A23N 1/00**

(21) Anmeldenummer: **89113839.8**

(22) Anmeldetag: **27.07.89**

(54) **Verfahren und Vorrichtung zum Entsaften von Obst oder Gemüse.**

(30) Priorität: **27.09.88 DE 3832702**

(43) Veröffentlichungstag der Anmeldung:
**04.04.90 Patentblatt 90/14**

(45) Bekanntmachung des Hinweises auf die
Patenterteilung:
**16.12.92 Patentblatt 92/51**

(84) Benannte Vertragsstaaten:
**CH ES FR IT LI**

(56) Entgegenhaltungen:
**CH-A- 174 075**
**FR-A- 427 031**
**US-A- 2 398 440**

(73) Patentinhaber: **Sfintitchi, Gregor**
**Neckarpromenade 25/83**
**W-6800 Mannheim 1(DE)**

(72) Erfinder: **Sfintitchi, Gregor**
**Neckarpromenade 25/83**
**W-6800 Mannheim 1(DE)**

(74) Vertreter: **Ratzel, Gerhard, Dr.**
**Seckenheimer Strasse 36a**
**W-6800 Mannheim 1(DE)**

EP 0 361 017 B1

## Beschreibung

Die Erfindung betrifft ein Verfahren und eine Vorrichtung zum Entsaften von Obst oder Gemüse, wie z.B. Trauben, Zitrusfrüchte und Oliven.

Zur Gewinnung von Saft und Most aus Obst oder Gemüse sind die verschiedenartigsten Pressen bekannt.

Die meist verwendeten Pressen sind dabei Spindelpressen, Gewichtspressen und Zentrifugalpressen.

Teils werden diese Pressen per Hand betrieben, wie z. B. einfache Haushaltsmaschinen oder aber über Aggregate oder sonstiger Antriebsmittel betrieben.

Speziell bei der Herstellung von Most und Saft im Lebensmittelbereich sind diese Antriebsaggregate sehr aufwendig, da die Betriebs- und Schmieröle des Aggregates nicht mit dem gewonnenen Saft in Berührung kommen dürfen. Ferner ist zum Betreiben solcher aggregatsbetriebener Pressen ein großer Energieaufwand erforderlich.

Aus der FR-A-427 031 ist ein Verfahren gemäss dem Oberbegriff des Patentanspruches 1 bekannt, das zum Entsaften von Obst oder Gemüse herangezogen werden kann. Nachdem das in eine Mühle gepumpte zu entsaftende Gut die Mühle durchlaufen hat, fließt es in einen Trichter und wird einem Entsaftungsbereich zugeführt, bei dem es sich durch Gleiten auf durchlöcherten Rinnen teilweise entsaftet.

Ein Entsaften des Obst oder Gemüses durch Eigendruck ist mit solch einer Anlage nicht möglich.

Der Erfindung liegt daher die Aufgabe zugrunde, einen Entsafter für Obst und Gemüse bereitzustellen, der es ermöglicht, den Saft durch den Eigendruck des zu entsaftenden Mediums zu gewinnen und dabei die Vorrichtung in verschiedenen Sektionen aufzuteilen,in denen die verschiedenen Saftqualitäten einer Maische abzuführen.

Diese Aufgabe wird erfindungsgemäß durch ein Verfahren gemäß dem Anspruch 1 gelöst.

Ferner wird die Aufgabe der Erfindung durch eine Vorrichtung zur Durchführung des Verfahrens gelöst, gemäß dem Anspruch 2.

Besondere Ausführungsmerkmale der Vorrichtung sind in den Ansprüchen 3 bis 13 gekennzeichnet.

Anhand der beigefügten Zeichnungen, die ein besonderes Ausführungsbeispiel der Erfindung zeigen, wird diese nun näher erläutert. Dabei zeigen:

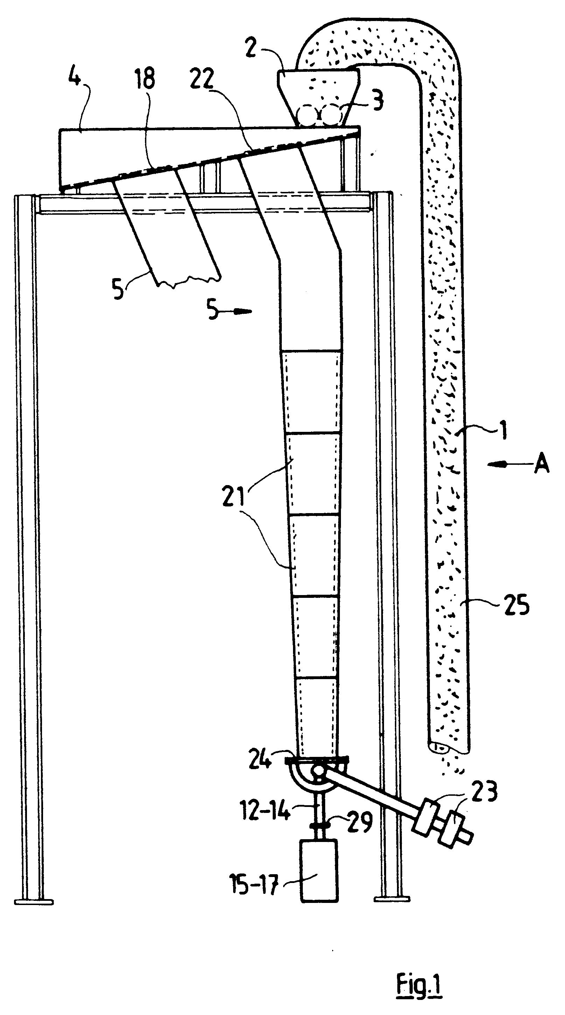

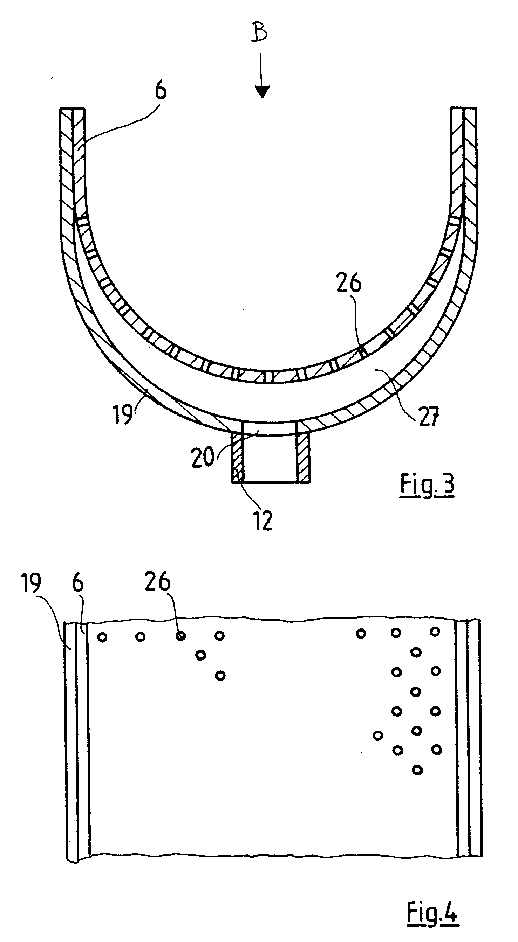

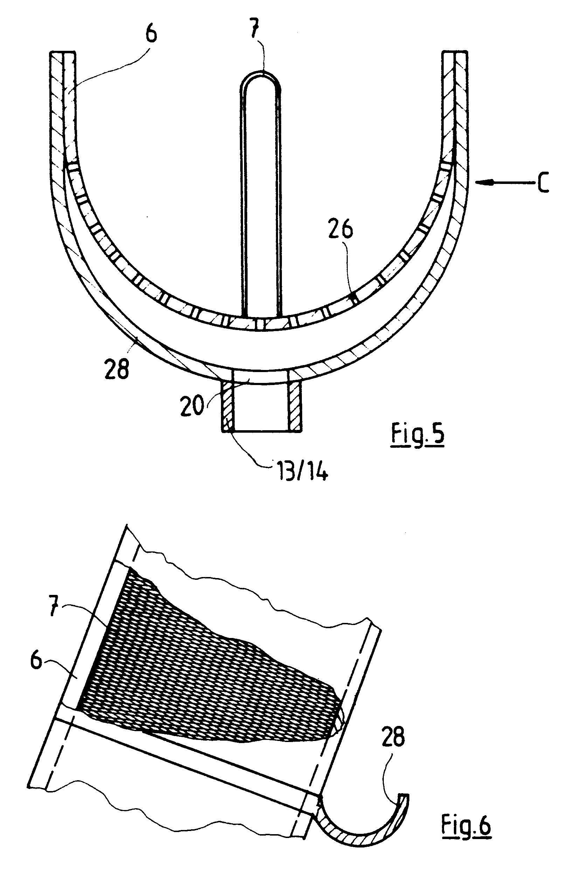

Figur 1
eine Seitenansicht der Vorrichtung,
Figur 2
eine Vorderansicht der Vorrichtung aus der in Figur 1 angedeuteten Richtung A,
Figur 3
einen Querschnitt durch die Rinne der Sektion 8 und 9
Figur 4
eine Draufsicht auf die Rinne aus der in Figur 3 angedeuteten Richtung B und
Figur 5
einen Querschnitt durch die Rinne der Sektion 10 und 11,
Figur 6
eine Seitenansicht aus der in Figur 5 angedeuteten Richtung C,
Figur 7 und Figur 8
das durchlöcherte Blech in der Ausführung als Schlitzbrückenblech,
Figur 9
ein Schemabild anhand dessen das Verfahren erläutert wird.

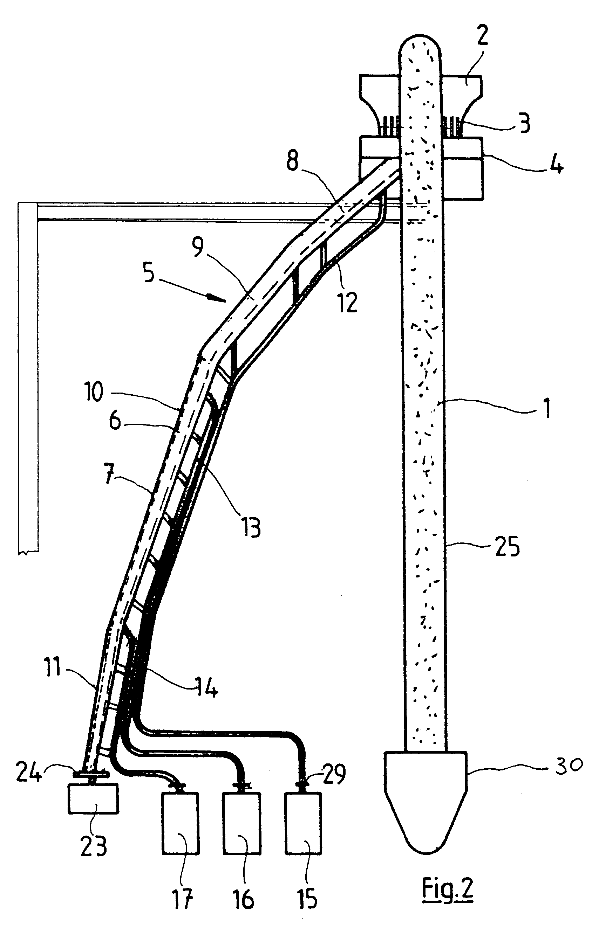

Die Figur 1 zeigt eine Seitenansicht und die Figur 2 eine Vorderansicht aus der in Figur 1 angedeuteten Richtung A der Vorrichtung. Mittels einer Pumpe 30 wird das bereits vorzerdrückte zu entsaftende Gut 1 durch das Steigrohr 25 in ein Auffangtank 2 gepumpt.

Der Auffangtank befindet sich etwa 15 bis 20 Meter über dem Bodenbereich der Auslaßklappe 24. Die Angabe der 15 bis 20 Metern bezieht sich auf die gängigsten Früchte. Je nach zu entsaftendem Gut kann diese Höhe jedoch zu variieren sein.

Nachdem sich das zu entsaftende Gut 1 in dem Auffangtank 2 befindet, durchläuft dieses eine unterhalb des Auffangtanks 2 befindliche Mühle 3 und fließt in den Trichter 4. Der Trichter 4 weist eine geneigte Innenfläche 18 auf. Es hat sich hierbei eine Neigung von etwa 15° als günstig erwiesen.

Auf der Innenfläche 18 des Trichters 4 ist mindestens eine schließbare Klappe 22 angeordnet, unter denen sich die Entsafterkolonnen 5 befinden.

Der Öffnungs- und Schließvorgang der Klappe 22 erfolgt per Handrad oder auch automatisch.

Je nachdem welche Entsafterkolonne 5 betrieben werden soll, wird die hierzu geordnete Klappe 22 geöffnet. Das zu entsaftende Gut 1 fließt über die geneigte Innenfläche 18 des Trichters 4 durch die geöffnete Klappe 22 in die Entsafterkolonne 5.

In diesem Ausführungsbeispiel ist die Entsafterkolonne 5 in vier Sektionen eingeteilt.

Selbstverständlich liegt es im Sinne dieser Erfindung, eine Entsafterkolonne entsprechend dem zu entsaftenden Gut mit weniger oder mehr Sektionen auszubilden.

Die Entsafterkolonne 5 dieses Ausführungsbeispiels besteht aus vier Sektionen 8 bis 11 mit verschiedenen Gefällen. Die Sektionen 8 und 9 sind aus einer U-förmigen Rinne 6 mit unterhalb der Rinnen angeordneten Auffangwannen 19 gebildet. Die Sektionen 10 und 11 bestehen aus U-förmigen Rinnen 6 mit innenliegenden Sieben 7 mit unterhalb der Rinnen angeordneten Auffangschalen 28.

Die Sektion 8 weist in diesem Ausführungsbeispiel eine Neigung mit einem Innenwinkel von 40° auf. Die Sektion 9 weist eine Neigung mit dem Innenwinkel von 50° auf. In beiden Sektionen 8 und 9 erfolgt die Entsaftung durch Gleiten und Eigendruck. Die anschließende Sektion 10 weist einen Neigungsinnenwinkel von 70° und die Sektion 11 eine Neigung mit einem Innenwinkel von 80° auf. In den beiden letzten Sektionen erfolgt die Entsaftung durch Eigendruck.

In der Sektion 8 und 9 wird ein Saft bzw. ein Most von erster Qualität gewonnen. Er weist zum Abführen des Saftes bzw. Mostes ein eigenes Rohrleitungssystem 12 auf, das von den Rohrleitungssystemen 13 und 14 getrennt ist und in den Tank 15 führt. Die Sektion 10 dient zur Gewinnung von Saft bzw. Most zweiter Qualität und weist hierzu wiederum ein eigenes Rohrleitungssystem 13 auf, das von den Rohrleitungssystemen 12 und 14 getrennt ist und in den Tank 16 führt.

Die Sektion 11 dient zur Gewinnung von Saft bzw. Most dritter Qualität und weist hierzu ein eigenes Rohrleitungssystem 14, das wiederum von dem Rohrleitungssystem 12 und 13 getrennt ist und in den Tank 17 führt.

Vor dem Einlaß in die Tanks sind in den Rohrleitungssystemen Sperrventile bzw. Hähne 29 angeordnet.

Im Bodenbereich der Entsafterkolonne 5 ist eine Auslaßklappe 24 angeordnet, die mittels Gewichten 23 manipuliert wird und verschraubt ist.

Das entsaftete Gut kann hier abgelassen und mittels eines hier nicht gezeigten Band abgefördert werden. Ein besonderes Merkmal der Erfindung ist die beidseitige, pyramidenförmige konische bzw. tronkonische Ausbildung der Sektion 10 und 11.

Die Figur 3 zeigt einen Querschnitt durch die Entsafterkolonne im Bereich der Sektion 8 und 9 und Figur 4 eine Ansicht aus der in Figur 3 angedeuteten Richtung B.

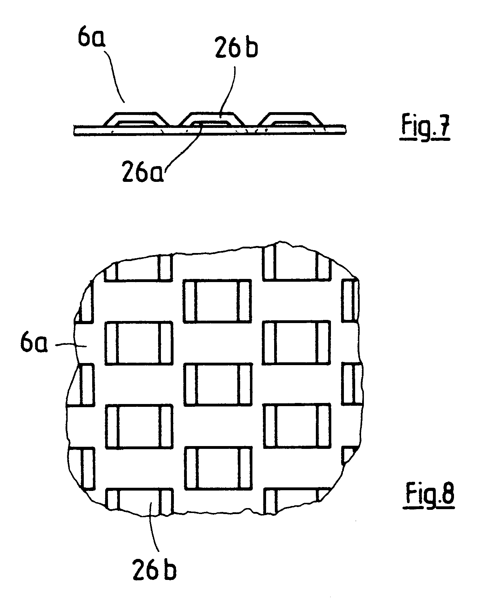

Sie besteht aus einer U-förmigen Rinne 6, die durchgehende Bohrungen 26 aufweist, so daß eine durchlöcherte Rinne gebildet wird bzw. aus einem Schlitzbrückenblech 6a, wie dies in Figur 7 und 8 dargestellt ist.

Beim Abwärtsgleiten des zu entsaftenden Gutes 1 dringt der Saft durch die Bohrungen 26 in den Hohlraum 27 zwischen Auffangwanne 19 und Rinne 6. Durch die Ablaufbohrung 20 gelangt der Saft in das Rohrleitungssystem 12.

Je nach Verwendung von Obst- oder Gemüsegut weisen die Entsafterkolonnen einen derartigen Aufbau auf, wobei die ersten Sektionen durchlöcherte Rinnen mit oder ohne Siebe und die unteren Sektionen durchlöcherte Rinnen mit innenliegenden Sieben aufweisen. Dies ist wie bereits zuvor erwähnt abhängig vom zu entsaftenden Gut.

Figur 5 zeigt einen Querschnitt durch die Rinne der Sektionen 10 und 11, die Figur 6 eine Ansicht aus der in Figur 5 angedeuteten Richtung C.

Da in diesen Sektionen ein Neigungswinkel von 70° bzw. 80° vorliegt, genügt es im Abstand von etwa einem halben Meter unterhalb der Rinnen 6 Auffangschalen 28 anzuordnen, da der gewonnene Saft bzw. Most aufgrund des vorliegenden Neigungswinkels unterhalb der Rinnen 6 entlanggleitet. Diese Auffangschalen 28 führen in die Rohrleitungssysteme 13 oder 14.

Die Figuren 7 und 8 zeigen das durchlöcherte Blech in der Ausführung als Schlitzbrückenblech 6a.
Diese Ausführungsform ist für das ganze Rinnensystem zu bevorzugen, da die Löcher 26a, die durch die Schlitzbrücken 26b gebildet werden nicht verstopft werden.

Ein weiteres Merkmal der Erfindung besteht darin, daß in den Sektionen 10 und 11, in denen ein Rinnenquerschnitt wie in den Figuren 5 und 6 dargestellt vorliegt, innerhalb der Rinne 6 mindestens ein doppelwandiges Sieb 7 angeordnet ist.

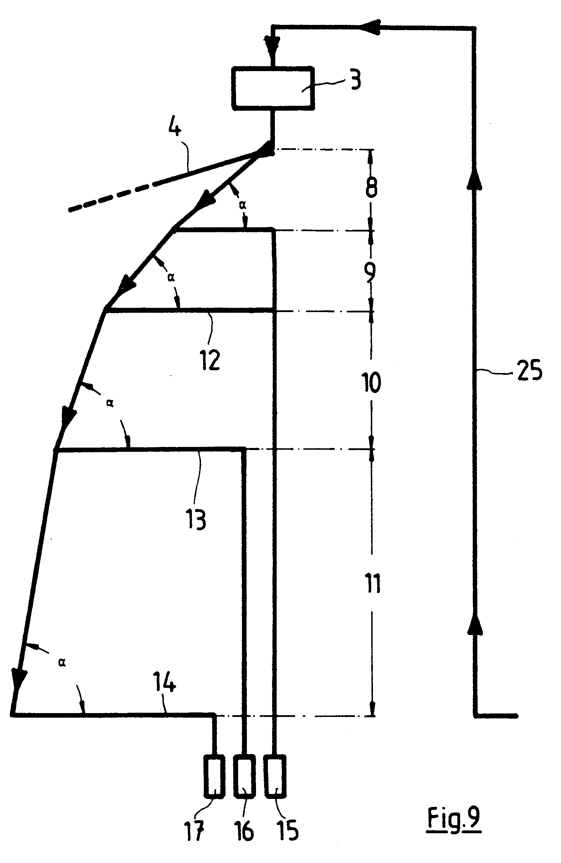

Anhand der Figur 9, die ein Schemabild des Verfahrens darstellt, wird dieses nun beschrieben.

Über das Steigrohr 25 wird das zu entsaftende Gut auf ein bestimmtes Höhenniveau gefördert. Je nach zu entsaftendem Gut wird die erforderliche Höhe gewählt. Nachdem das zu entsaftende Gut die Mühle 3 durchlaufen hat, fließt dieses in den Trichter 4 der ebenfalls eine geringe Neigung aufweist. Aus dem Trichter 4 gleitet das zu entsaftende Gut in die erste Sektion 8, die eine Neigung mit einem Innenwinkel $\alpha$ von 40° aufweist. Danach gleitet das zu entsaftende Gut in die zweite Sektion 9, die eine Neigung mit einem Innenwinkel $\alpha$ von 50° aufweist. Die Neigungswinkel sind variabel gestaltbar, d. h. die Vorrichtung weist eine Verstellmöglichkeit auf, mit der der Winkel $\alpha$ den Anforderungen entsprechend geändert werden kann.

Im Bereich der ersten und zweiten Sektion (8 und 9) wird ein Saft bzw. Most von erster Qualität gewonnen, der durch das Rohrleitungssystem 12 in den Tank 15 gefördert wird. Die dritte Sektion 10, hier beginnt die Zone des Eigendrucks, weist eine Neigung mit einem Innenwinkel $\alpha$ von 70° auf.

In diesem Bereich wird ein Saft bzw. Most von zweiter Qualität gewonnen und über das Rohrleitungssystem 13 zum Tank 16 gefördert.

Die vierte Sektion 11 weist eine Neigung mit dem Innenwinkel $\alpha$ von 80° auf. In dieser Sektion wird ein Saft bzw. Most von dritter Qualität gewonnen und über das Rohrleitungssystem 14 zum Tank 17 gefördert.

Mit diesem Verfahren und der vorgeschlagenen Vorrichtung zur Durchführung des Verfahrens, wird es ermöglicht, Obst oder Gemüse durch Eigendruck zu entsaften und dabei beim gleichen Entsaftungsvorgang Saft bzw. Most verschiedener Qualitäten zu gewinnen und entsprechend getrennt abzuleiten und zu lagern.

Zur Betreibung bedarf es lediglich eines Elektromotors, der die Mühle antreibt.

Aufgrund des konstruktiven Aufbaus der Vorrichtung ist diese einfach zu reinigen, wobei ein eventuell zur Stützung eingesetztes Gerüst verwendet werden kann.

**Patentansprüche**

1. Verfahren zum Entsaften von Obst oder Gemüse, wobei der Saft unterschiedlicher Qualität in verschiedenen Sektionen gewonnen wird und über getrennte Rohrleitungssysteme (12 bis 14) abgeleitet und in Tanks (15 bis 17) eingeführt wird, wobei das zu entsaftende Gut (1) in einen Auffangtank (2) gepumpt wird, eine unter dem Auffangtank befindliche Mühle (3) durchläuft und in einen Trichter (4) fließt, an den mindestens eine abschüssig ausgebildete durchlöcherte Entsaftungsrinne (6) anschließt, in die das zu entsaftende Gut eingeleitet wird, dadurch gekennzeichnet, daß das zu entsaftende Gut (1) zerdrückt und etwa 15 bis 20 m hoch in den Auffangtank (2) gepumpt wird, die unter dem Auffangtank befindliche Mühle (3) durchläuft und in den Trichter (4) fließt, wobei die Entsaftungsrinne zusammen mit mindestens einer weiteren durchlöcherten Rinne eine Entsafterkolonne (5) aus durchlöcherten Rinnen (6) mit oder ohne Sieben (7) bildet, die sich aus mehreren Sektionen (8 bis 11) mit verschiedenen Gefällen zusammensetzt, in denen das zu entsaftende Gut (1) abwärts gleitet, sich in einer ersten Sektion (8) und in einer zweiten Sektion (9) durch Gleiten und Eigendruck und in einer dritten und einer vierten Sektion (10, 11) durch Eigendruck entsaftet.

2. Vorrichtung zur Durchführung des Verfahrens nach Anspruch 1, dadurch gekennzeichnet, daß die Vorrichtung aus einem Trichter (4) mit geneigter Innenfläche (18), mindestens einer abschüssigen Entsafterkolonne (5) aus durchlöcherten Rinnen (6) mit oder ohne Sieben (7), unterhalb der durchlöcherten Rinnen angeordneten Auffangwannen (19) und Auffangschalen (28), die zu Rohrleitungssystemen (12 bis 14) führen, mit zugehörigen Tanks (15 bis 17) besteht, wobei die Entsafterkolonne aus vier Sektionen (8 bis 11) besteht, nur die erste Sektion (8) eine Neigung mit einem Innenwinkel ($\alpha$) von etwa 40°, die zweite Sektion (9) eine Neigung mit einem Innenwinkel ($\alpha$) von etwa 50°, die dritte Sektion (10) eine Neigung mit einem Innenwinkel ($\alpha$) von etwa 70° und die vierte Sektion (11) eine Neigung mit einem Innenwinkel ($\alpha$) von etwa 80° aufweist.

3. Vorrichtung nach Anspruch 2, dadurch gekennzeichnet, daß die Rinnen (6) U-förmig ausgebildet sind.

4. Vorrichtung nach einem der Ansprüche 2 - 3, dadurch gekennzeichnet, daß unterhalb der durchlöcherten Rinnen (6) im Bereich der ersten Sektion (8) und der zweiten Sektion (9) Auffangwannen (19) mit Ablaufbohrungen (20) zum eigenen Rohrleitungssystem (12) angeordnet sind.

5. Vorrichtung nach einem der Ansprüche 2 - 4, dadurch gekennzeichnet, daß innerhalb der durchlöcherten Rinnen (6) im Bereich der dritten Sektion (10) und der vierten Sektion (11) mindestens ein Sieb (7) auf der gesamten Rinnenlänge angeordnet ist.

6. Vorrichtung nach einem der Ansprüche 2 - 5, dadurch gekennzeichnet, daß die Neigung der einzelnen Sektionen (8 - 11) variabel einstellbar sind.

7. Vorrichtung nach einem der Ansprüche 2 - 6, dadurch gekennzeichnet, daß die dritte Sektion (10) und die vierte Sektion (11) mittels Türen (21) geschlossen sind.

8. Vorrichtung nach einem der Ansprüche 2 - 7, dadurch gekennzeichnet, daß der Trichter (4) auf seiner geneigten Innenfläche (18) mindestens eine schließbare Klappe (22) aufweist.

9. Vorrichtung nach einem der Ansprüche 2 - 8, dadurch gekennzeichnet, daß im Bodenbereich der Entsafterkolonne (5) eine mittels Gewichten (23) manipulierbare und verschraubbare Klappe (24) angeordnet ist, mit der durch Öffnen dieser, das entsaftete Gut aus der Entsafterkolonne (5) abgelassen werden kann.

10. Vorrichtung nach einem der Ansprüche 2 - 9, dadurch gekennzeichnet, daß die Entsafterkolonne (5) aus rostfreiem Stahl geschaffen und mit Kunststoffplatten abgedeckt ist.

11. Vorrichtung nach einem der Ansprüche 2 - 10,

dadurch gekennzeichnet,
daß unterhalb der durchlöcherten Rinnen (6) im Bereich der dritten Sektion (10) und der vierten Sektion (11) Auffangschalen (28), die zu den eigenen Rohrleitungssystemen (13, 14) führen, angeordnet sind.

12. Vorrichtung nach einem der Ansprüche 2 - 11, dadurch gekennzeichnet,
daß die durchlöcherten Rinnen (6) als Schlitzbrückenbleche (6a) ausgebildet sind.

13. Vorrichtung nach einem der Ansprüche 2 - 12, dadurch gekennzeichnet,
daß die dritte Sektion (10) und die vierte Sektion (11) beidseitig konisch ausgebildet sind.

**Claims**

1. A method of extracting juice from fruit or vegetables, wherein juice of varying quality is produced in different sections and is drawn off through separate pipe systems (12 to 14) and is introduced into tanks (15 to 17), wherein the produce (1) from which juice is to be extracted is pumped into a collecting tank (2), passes through a crusher (3) disposed under the collecting tank and flows into a hopper (4) which is adjoined by at least one perforated, sloping juice-extraction channel (6) into which is admitted the produce (1) from which juice is to be extracted, characterised in that the produce (1) from which juice is to be extracted is compressed and pumped to a height of approximately 15 to 20 m into the collecting tank (2), passes through the crusher (3) disposed under the collecting tank and flows into the hopper (4), the juice-extraction channel forming together with at least one other perforated channel a juice-extractor column (5) comprising perforated channels (6) with or without sieves (7), which are composed of a plurality of sections (8 to 11) having different gradients and in which the produce (1) from which juice is to be extracted slides downwards, juice being extracted therefrom in a first section (8) and in a second section (9) by sliding and inherent pressure and in a third section and fourth section (10, 11) by inherent pressure.

2. An apparatus for carrying out the method to Claim 1, characterised in that the apparatus comprises a hopper (4) with an inclined inner surface (18), at least one sloping juice-extractor column (5) of perforated channels (6) with or without sieves (7), collecting troughs (19) and collecting dishes (28) which are disposed below the perforated channels and which lead to pipe systems (12 to 14), with associated tanks (15 to 17), wherein the juice-extractor column comprises four sections (8 to 11), of which only the first section (8) has an inclination with an interior angle (α) of approximately 40°, the second section (9) has an inclination with an interior angle (α) of approximately 50°, the third section (10) has an inclination with an interior angle (α) of approximately 70° and the fourth section (11) has an inclination with an interior angle (α) of approximately 80°.

3. An apparatus according to Claim 2, characterised in that the channels (6) are U-shaped.

4. An apparatus according to either one of Claims 2 and 3, characterised in that collecting troughs (19) with outlet bores (20) to their respective pipe system (12) are disposed below the perforated channels (6) in the vicinity of the first section (8) and the second section (9).

5. An apparatus according to any one of Claims 2 to 4, characterised in that at least one sieve (7) is disposed inside the perforated channels (6) over the entire channel length in the vicinity of the third section (10) and the fourth section (11).

6. An apparatus according to any one of Claims 2 to 5, characterised in that the inclination of the individual sections (8 to 11) can be variably adjusted.

7. An apparatus according to any one of Claims 2 to 6, characterised in that the third section (10) and the fourth section (11) are closed by means of doors (21).

8. An apparatus according to any one of Claims 2 to 7, characterised in that on its inclined inner surface (18) the hopper (4) has at least one closable flap (22).

9. An apparatus according to any one of Claims 2 to 8, characterised in that in the base area of the juice-extractor column (5) there is disposed a flap (24) which can be moved by means of weights (23) and is screwed, and which, upon being opened, allows the produce from which juice has been extracted to be discharged from the juice-extractor column (5).

10. An apparatus according to any one of Claims 2 to 9, characterised in that the juice-extractor column (5) is made of stainless steel and is covered with plastics panels.

**11.** An apparatus according to any one of Claims 2 to 10, characterised in that collecting dishes (28), which lead to respective pipe systems (13, 14), are disposed below the perforated channels (6) in the vicinity of the third section (10) and the fourth section (11).

**12.** An apparatus according to any one of Claims 2 to 11, characterised in that the perforated channels (6) take the form of slotted bridge plates (6a).

**13.** An apparatus according to any one of Claims 2 to 12, characterised in that the third section (10) and the fourth section (11) are conically shaped at both ends.

**Revendications**

**1.** Procédé pour extraire le jus des fruits et des légumes, dans lequel le jus de qualité diverse est obtenu dans différentes sections, évacué par des systèmes séparés de tuyauterie (12 à 14) et introduit dans des réservoirs (15 à 17), procédé dans lequel le produit (1) dont le jus est à extraire est pompé dans un réservoir collecteur (2), traverse un broyeur (3) situé au-dessous du réservoir collecteur et coule dans un entonnoir (4) auquel est reliée au moins une rigole d'extraction de jus (6) perforée et disposée en pente, dans laquelle est introduit le produit dont le jus est à extraire, caractérisé en ce que le produit (1) dont le jus est à extraire est broyé et pompé à une hauteur d'environ 15 à 20 m dans le réservoir collecteur (2), traverse le broyeur (3) situé au-dessous du réservoir collecteur et coule dans l'entonnoir (4), la rigole d'extraction de jus et au moins une autre rigole perforée formant ensemble une colonne d'extraction de jus (5) formée de rigoles perforées (6) avec ou sans tamis (7), qui est composée de plusieurs sections (8 à 11) ayant des pentes différentes, dans lesquelles le produit (1) dont le jus est à extraire glisse vers le bas et se débarrasse de son jus dans une première section (8) et dans une deuxième section (9), par glissement et par sa propre pression, et dans une troisième section (10) et une quatrième section (11), par sa propre pression.

**2.** Dispositif pour la mise en oeuvre du procédé selon la revendication 1, caractérisé en ce qu'il est formé d'un entonnoir (4) comportant une face interne (18) inclinée, au moins une colonne d'extraction de jus (5) en pente, formée de rigoles perforées (6), avec ou sans tamis (7), des cuves de réception (19) et des bacs de réception (28) disposés au-dessous des rigoles perforées et qui mènent aux systèmes de tuyauterie (12 à 14), avec des réservoirs (15 à 17) qui y sont associés, la colonne d'extraction de jus étant formée de quatre sections (8 à 11) dont seulement la première section (8) a une inclinaison formant un angle interne ($\alpha$) d'envi-ron 40°, la deuxième section (9) a une inclinaison formant un angle interne ($\alpha$) d'environ 50°, la troisième section (10) a une inclinaison for-mant un angle interne ($\alpha$) d'environ 70° et la quatrième section (11) a une inclinaison for-mant un angle interne ($\alpha$) d'environ 80°.

**3.** Dispositif selon la revendication 2, caractérisé en ce que les rigoles (6) sont conformées en U.

**4.** Dispositif selon une des revendications 2 et 3, caractérisé en ce que des cuves de réception (19) comportant des trous d'écoulement (20) dirigés vers leur propre système de tuyauterie (12) sont disposées au-dessous des rigoles perforées (6), dans la zone de la première section (8) et de la deuxième section (9).

**5.** Dispositif selon une des revendications 2 à 4, caractérisé en ce qu'au moins un tamis (7) est disposé sur toute la longueur des rigoles, à l'intérieur des rigoles perforées (6), dans la zone de la troisième section (10) et de la quatrième section (11).

**6.** Dispositif selon une des revendications 2 à 5, caractérisé en ce que l'inclinaison des sections individuelles (8 à 11) peut être réglée de façon variable.

**7.** Dispositif selon une des revendications 2 à 6, caractérisé en ce que la troisième section (10) et la quatrième section (11) peuvent être fermées au moyen de portes (21).

**8.** Dispositif selon une des revendications 2 à 7, caractérisé en ce que l'entonnoir (4) comporte au moins un clapet (22) pouvant être fermé, sur sa propre face interne inclinée (18).

**9.** Dispositif selon une des revendications 2 à 8, caractérisé en ce qu'un clapet (24) vissable et pouvant être actionné au moyen de poids (23) est disposé dans la zone de fond de la colonne d'extraction de jus (5), au moyen de l'ouverture duquel le produit dont le jus est extrait peut être évacué de la colonne d'extraction de jus (5).

**10.** Dispositif selon une des revendications 2 à 9, caractérisé en ce que la colonne d'extraction de jus (5) est formée d'acier inoxydable et recouverte de plaques en matière plastique.

11. Dispositif selon une des revendications 2 à 10, caractérisé en ce que des bacs de réception (28) qui mènent aux propres systèmes de tuyauterie (13, 14) sont disposés au-dessous des rigoles perforées (6), dans la zone de la troisième section (10) et de la quatrième section (11).

12. Dispositif selon une des revendications 2 à 11, caractérisé en ce que les rigoles perforées (6) sont conformées en tôles pontales à fentes (6a).

13. Dispositif selon une des revendications 2 à 12, caractérisé en ce que la troisième section (10) et la quatrième section (11) sont conformées en cône des deux côtés.

**Fig.1**

Fig.2

B

6

26

19

20

27

12

Fig.3

19   6      26

Fig.4

Fig.5

Fig.6

Fig.7

Fig.8

Fig.9